# EUROPÄISCHE PATENTSCHRIFT

(11) **EP 2 313 741 B1**
(45) Veröffentlichungstag und Bekanntmachung des Hinweises auf die Patenterteilung: **18.01.2017**
(21) Anmeldenummer: 09776617.4
(22) Anmeldetag: 15.05.2009
(51) Int. Cl.: G01C 21/32

(54) **VERFAHREN ZUM AKTUALISIEREN EINER GEOGRAFISCHEN DATENBANK FÜR EIN FAHRZEUGNAVIGATIONSSYSTEM**
METHOD FOR UPDATING A GEOGRAPHIC DATABASE FOR A VEHICLE NAVIGATION SYSTEM
PROCÉDÉ D'ACTUALISATION D'UNE BASE DE DONNÉES GÉOGRAPHIQUES POUR LE SYSTÈME DE NAVIGATION D'UN VÉHICULE

(30) Priorität: 16.07.2008 US 174003; 20.04.2009 DE 102009018073
(43) Veröffentlichungstag der Anmeldung: 27.04.2011
(73) Patentinhaber: Audi AG, 85045 Ingolstadt (DE); Volkswagen Aktiengesellschaft, 38440 Wolfsburg (DE)
(72) Erfinder: SAMPEDRO DIAZ, Luis, Mountain View CA 94041 (US); ROSARIO, Daniel De Rocha, 85049 Ingolstadt (DE); HELD, Daniel, 04105 Leipzig (DE)
(74) Vertreter: Brandt, Kai
(86) Internationale Anmeldenummer: PCT/EP2009/003472
(87) Internationale Veröffentlichungsnummer: WO 2010/006669

(56) Entgegenhaltungen:
- DE-A1-102004 010 197
- JP-A- 2006 125 883
- JP-A- 2008 039 687
- US-A1- 2005 283 699
- US-A1- 2007 124 064

## Beschreibung

Die Erfindung betrifft ein Verfahren zum Aktualisieren einer geografischen Datenbank, bei dem basierend auf von einem Fahrzeugnavigationssystem gelieferter Information festgestellt wird, ob sich ein Fahrzeug in einer Position auf einer Straße befindet sowie ein entsprechendes Kraftfahrzeug.

Konventionelle Fahrzeugnavigationssysteme greifen normalerweise auf eine geografische Datenbank zu, die zum Beispiel auf einer DVD (Digital Versatile Disc) oder einem anderen lokalen Datenträger gespeichert ist. Geografische Datenbanken enthalten eine geografische Darstellung der Straßen in der Form einer Straßenkartenvektordatenbank. Geografische Datenbanken können weiterhin Geschwindigkeitsbegrenzungen auf den Straßen, Wendeverbote, Straßennamen, Standorte von Ampeln usw. enthalten. Geografische Datenbanken können außerdem Orte von Interesse (Points of Interest) wie Hotels, Restaurants, Tankstellen, Parks und Flughäfen enthalten.

Die in diesen geografischen Datenbanken enthaltene Information wird zum Beispiel verwendet, um Karten zu erzeugen oder eine Route zu berechnen. Wenn Änderungen auftreten, zum Beispiel wenn neue Straßen gebaut werden, wenn Geschäfte umziehen oder ihren Namen ändern, wenn Wendeverbote eingeführt oder geändert werden, dann ist die in diesen geografischen Datenbanken enthaltene Information veraltet. Die geografischen Datenbanken müssen deshalb dauernd aktualisiert und die Datenbankinformation verteilt bzw. zur Verfügung gestellt werden.

Mit der Hilfe eines Bildverarbeitungsverfahrens können Satellitenbilder und/oder Luftbilder benutzt werden, um geografische Daten, zum Beispiel geografische Koordinaten von Straßen zu extrahieren. Außerdem können die Satellitenbilder und/oder Luftbilder auch benutzt werden, um Übersichtskarten oder sogar dreidimensionale fotorealistische Karten zu erzeugen, die mit der geografischen Datenbank kombiniert werden können, um Straßen, Straßennamen, Orte von Interesse, Routen und andere Informationen zu überlagern. Die Datenbanken für die Satellitenbilder und/oder Luftbilder müssen deshalb ebenfalls dauernd aktualisiert werden.

Um Information zum Aktualisieren einer geografischen Datenbank zu sammeln, sind bisher verschiedene Verfahren verwendet worden. Information für die geografische Datenbank kann von für diesen Zweck eigens eingestellten Personen gesammelt werden, die alle Straßen in bestimmten geographischen Gebieten abfahren und geografische Charakteristiken aufzeichnen. Ein Nachteil geografische Information mit Hilfe von Personen zu sammeln, die alle Straßen in einem zugewiesenen geografischen Bereich abfahren, um Information zu sammeln, ist, dass es zeitraubend und teuer ist. Ein weiterer Nachteil geografische Information mit Hilfe von Personen zu sammeln, die persönlich zu bestimmten Gebieten reisen, ist, dass die Informationsbeschaffung in kurzen Zeitintervallen wiederholt ausgeführt werden muss, um die geografische Datenbank auf einem aktuellen Stand zu halten. In einigen Fällen, beispielsweise in Neubaugebieten, die gerade bebaut werden, ist es unter Umständen nicht möglich die geographische Datenbank rechtzeitig auf einen aktuellen Stand zu bringen.

Eine weitere, kompliziertere Vorgehensweise für das Aktualisieren einer geografischen Datenbank ist in der US 6,873,998 B1 beschrieben, in der ein Berichterstattungsprogramm zum Aktualisieren einer Originalkopie einer geografischen Datenbank offenbart ist. Gemäß dem Verfahren der US 6,873,998 B1 werden Berichte eingeholt, die sich auf in der geografischen Datenbank enthaltene Daten beziehen. Satellitenbilder der geografischen Orte, die den Daten in den Berichten entsprechen, werden besorgt. Die Satellitenbilder werden analysiert, um zu bestätigen, ob Änderungen in der geografischen Datenbank aufgrund der Berichte notwendig sind. Nachdem die Notwendigkeit einer Änderung bestätigt wird, wird die geografische Datenbank aktualisiert. Ein Nachteil dieses Verfahrens ist, dass es darauf angewiesen ist, dass der Endbenutzer Änderungen mitteilt. Endbenutzern kann die nötige Erfahrung, Motivation oder Zeit fehlen, die erforderlich ist, um Datenbankfehler zu erkennen, um Datenbankfehler richtig zu dokumentieren und um die Datenbankfehler dem Datenbankentwickler mitzuteilen. Infolgedessen ist ein Verfahren zum Aktualisieren einer geografischen Datenbank, wie es in der US 6,873,998 B1 beschrieben ist, möglicherweise unzuverlässig. Ein weiterer Nachteil dieses Verfahrens ist, dass im Allgemeinen archivierte Satellitenbilder verwendet werden, um die Endbenutzerberichte bezüglich Datenbankänderungen zu bestätigen. Archivierte Satellitenbilder für das Bestätigen eines Endbenutzerberichts können überholt sein und daher muss möglicherweise ein Satellitenbild aufgenommen werden, bevor der Endbenutzerbericht bestätigt werden kann. Ein weiterer Nachteil des in der US 6,873,998 B1 beschriebenen Verfahrens ist, dass die Satellitenbilder, die für das Bestätigen eines Endbenutzerberichts verwendet werden, eine Auflösung haben können, die nicht ausreicht ein geografisches Charakteristikum zu bestätigen. In diesem Fall müsste eine Person zum entsprechenden Ort reisen, um zu bestätigen, ob eine Datenbankaktualisierung erforderlich ist.

Ein weiterer Ansatz für das Aktualisieren einer geografischen Datenbank basiert auf dem Konzept, Verkehrsflussmuster zu überwachen und Abweichungen von normalen Verkehrsflussmustern zu berichten, um Straßenvektoren zu aktualisieren. Die Verkehrsflussmuster werden durch Aufzeichnen von Datenpunkten durch mit Navigationssystemen ausgestatteten Fahrzeugen überwacht, wobei die Datenpunkte durch das Fahren auf den Straßen im Straßennetzwerk erfasst werden. Wenn ein Fahrzeug nicht dem im Speicher eines Navigationssystems abgelegten nächstliegenden Straßenvektor folgt, dann wird dies als eine Anomalie eingestuft und das Fahrzeug kann als abseits der Straße fahrend eingestuft werden. Falls eine ausreichende Anzahl von Fahrzeugen dieselbe Anomalie berichtet, dann kann man statistisch daraus folgern, dass sich möglicherweise der Straßenvektor selbst geändert hat. Das Grundprinzip eines solchen Systems wird zum Beispiel in der US 2006/0155464 A1 offenbart, in der ein Verfahren zum Erzeugen, Ableiten und Verbessern von Datenbanken für befahrbare Straßen beschrieben wird.

Gemäß der US 2006/0155464 A1 wird in einem Straßennetzwerk eine Vergleichsdatenstraße definiert. Positionsdaten und/oder Bahnkurvendaten werden mit Hilfe von Fahrzeugen, die die Vergleichsdatenstraße befahren, erfasst und werden mit einer Darstellung der Vergleichsdatenstraße in einer vorhandenen Datenbank verglichen, um die vorhandene Datenbank zu aktualisieren. Ein Nachteil dieses Verfahrens ist, dass es Fälle unberücksichtigt lässt, in denen viele Fahrzeuge unter demselben technischen Fehler, beispielsweise einer GPS-Drift, leiden. Eine GPS-Drift, die eine große Anzahl von GPS Systemen beeinflusst, ist nicht unwahrscheinlich in Anbetracht der Tatsache, dass es nur eine kleine Zahl von Zulieferfirmen für automobile GPS Chipsätze gibt. Ein technischer Fehler im Chipsatz eines einzigen Chipsatzlieferanten kann deshalb eine große Anzahl von GPS Systemen beeinflussen. Die von entsprechend betroffenen GPS Systemen erfassten Datenpunkte wären daher falsch, und die vorhandene Datenbank könnte auf der Grundlage von falschen Daten aktualisiert werden. Ein weiterer Nachteil des Verfahrens ist ihre mangelhafte Effizienz, da das Verfahren dazu tendiert, den Vorgang der Mitteilung der Anomalie von der Erfassung und Analyse der Daten und letztendlich von der Aktualisierung der Datenbank zu isolieren.

JP 2006 125883 A offenbart ein Verfahren zum Aktualisieren einer geografischen Datenbank, bei dem basierend auf einer von einem Fahrzeugnavigationssystem gelieferten Information festgestellt wird, ob sich ein Fahrzeug in einer Position auf einer Straße befindet, wobei unter Verwendung einer im Fahrzeug montierten Kamera ein geografisch kodiertes Bild erzeugt wird falls, gemäß der vom Fahrzeugnavigationssystem gelieferten Information, sich das Fahrzeug nicht in einer Position auf der Straße befindet.

JP 2008 039687 A offenbart ebenfalls ein Verfahren zum Aktualisieren einer geografischen Datenbank, bei dem basierend auf einer von einem Fahrzeugnavigationssystem gelieferten Information festgestellt wird, ob sich ein Fahrzeug in einer Position auf einer Straße befindet US 2007/124064 A1 offenbart ein Verfahren zum Aktualisieren einer geografischen Datenbank, bei dem unter Verwendung einer im Fahrzeug montierten Kamera ein geografisch kodiertes Bild erzeugt wird.

US 2005/283699 A1 offenbart ein Kraftfahrzeug mit einem Fahrzeugnavigationssystem und eine aktualisierbare geografische Datenbank.

Aufgabe der Erfindung ist demnach, ein Verfahren zum Aktualisieren einer geografischen Datenbank zu schaffen, das die oben erwähnten Nachteile der bisher bekannten Verfahren vermeidet und das effizienter als herkömmliche Verfahren zum Aktualisieren von geografischen Datenbanken ist.

Die Aufgabe wird durch ein Verfahren gemäß Anspruch 1 gelöst.

Bei dem erfindungsgemäßen Verfahren wird unter Verwendung einer im Fahrzeug montierten Kamera ein geografisch kodiertes Bild erzeugt, falls, gemäß der vom Fahrzeugnavigationssystem gelieferten
Information, sich das Fahrzeug nicht in einer Position auf der Straße befindet, und dass das mit Hilfe der im Fahrzeug montierten Kamera erzeugte, geografisch kodierte Bild analysiert wird, um festzustellen, ob eine Aktualisierung der geografischen Datenbank erforderlich ist.

Ein Vorteil des erfindungsgemäßen Verfahrens ist, dass eine Aktualisierung der Straßenkartenvektordatenbank effizienter durchgeführt wird, da die Verfahrensschritte automatisch ausgeführt werden und es nicht notwendig ist, dass der Endbenutzer einen Datenbankfehler erkennt und den Datenbankfehler telefonisch oder über das Internet mitteilt. Fehlermitteilungen, d.h. Fehlerberichte, die von den Fahrzeugen der Endbenutzer stammen, können infolgedessen unverzüglich übermittelt werden. Aktualisierungen der geografischen Datenbank können auf diese Art schneller ausgeführt werden als bei der Verwendung von konventionellen Verfahren. Ein weiterer Vorteil des erfindungsgemäßen Verfahrens ist, dass Bilder und Informationen über neue Straßen auf eine effiziente und kostengünstige Art gesammelt werden können, da das Verfahren mit Geräten durchgeführt werden kann, die in Fahrzeugen von Endbenutzern verfügbar sind.

Gemäß der Erfindung ist vorgesehen, dass die Analyse des von der im Fahrzeug montierten Kamera erzeugten, geografisch kodierten Bildes einen Vergleich des geografisch kodierten Bildes mit gespeicherten fotorealistischen Bilddaten umfasst.

Gemäß der Erfindung ist vorgesehen, dass überprüft wird, ob auf einem externen Server neue Daten, beispielsweise Straßenvektordaten, Bilddaten oder andere kartenbezogene Daten zum Herunterladen verfügbar sind, wenn in dem von der im Fahrzeug montierten Kamera erzeugten, geografisch kodierten Bild Straßencharakteristiken wahrgenommen werden, jedoch das von der im Fahrzeug montierten Kamera erzeugte, geografisch kodierte Bild nicht mit geografisch entsprechenden, gespeicherten Bilddaten für eine aktuelle Position übereinstimmt und weiterhin weder eine zuletzt übereinstimmende Straße noch eine nächstliegende Straße in dem geografisch kodierten Bild wahrgenommen wird. Wenn auf dem externen Server neue Daten zum Herunterladen verfügbar sind, werden die neuen Daten heruntergeladen. Wenn keine neuen Daten zum Herunterladen verfügbar sind, dann wird dem externen Server, basierend auf den im geografisch kodierten Bild wahrgenommenen Straßencharakteristiken, die Existenz einer neuen Straße mitgeteilt und es werden mit Hilfe der im Fahrzeug montierten Kamera geografisch kodierte Bilder der neuen Straße erzeugt. Dabei umfasst die Erzeugung der geografisch kodierten Bilder der neuen Straße vorzugsweise eine Erzeugung geografisch kodierter Bilder einer Kreuzung zwischen der neuen Straße und einer bekannten Straße. Dies ist vorteilhaft, da es wahrscheinlich ist, dass in der Nähe der Kreuzung neue Fahrbahnoberflächenmarkierungen, wie zum Beispiel Mittellinien, Wendeverbotszeichen usw. auf die neue Straße und/oder auf die bekannte Straße (d.h. die zuvor vorhandene Straße) gemalt worden sind. Außerdem sind Straßennamen, Verkehrszeichen und andere nützliche Informationen normalerweise an Kreuzungen zu finden. Es ist daher von Vorteil geografisch kodierte Bilder der Kreuzung zu erzeugen, an der die neue Straße und eine bekannte Straße aufeinandertreffen.

Gemäß der Erfindung ist vorgesehen, dass eine neue Straße direkt einer Datenbank des Fahrzeugnavigationssystems zugefügt wird, wenn die neue Straße mit einem gegebenen Vertrauensniveau wahrgenommen wird. Die neue Straße kann von dem Fahrzeugnavigationssystem als eine unbestätigte Straße angezeigt werden, bis die neue Straße in einer Hauptdatenbank auf dem externen Server bestätigt und aktualisiert wird.

In einer weiteren Ausführungsform der Erfindung ist vorgesehen, dass das von der im Fahrzeug montierten Kamera erzeugte, geografisch kodierte Bild analysiert wird, um Straßencharakteristiken im geografisch kodierten Bild zu erfassen, wenn das geografisch kodierte Bild mit geografisch entsprechenden Bilddaten übereinstimmt, die als fotorealistische Bilddaten gespeichert sind, und dass gefolgert wird, dass sich das Fahrzeug tatsächlich in einer Position abseits der Straße (Off-Road Position) befindet und keine Aktualisierung der geografischen Datenbank erforderlich ist, wenn in dem von der im Fahrzeug montierten Kamera erzeugten, geografisch kodierten Bild keine Straße (d.h. keine Straßencharakteristiken wie zum Beispiel Straßenbelagsmarkierungen oder andere Fahrzeuge) wahrgenommen wird.

In einer weiteren Ausführungsform der Erfindung ist vorgesehen, dass bei der Überprüfung, ob auf dem externen Server neue Daten zum Herunterladen verfügbar sind, überprüft wird, ob auf dem externen Server neue Straßenvektordaten verfügbar sind, und dass, wenn neue Straßenvektordaten auf dem externen Server verfügbar sind, die neuen Straßenvektordaten vom externen Server heruntergeladen werden.

In einer weiteren Ausführungsform der Erfindung ist vorgesehen, dass dem externen Server, auf der Grundlage von Messwerten, die vom Fahrzeugnavigationssystem beim Befahren der wahrgenommenen Straße geliefert werden, eine Straßenvektoraktualisierung mitgeteilt wird, wenn keine neuen Straßenvektordaten auf dem externen Server verfügbar sind.

In einer weiteren Ausführungsform der Erfindung ist vorgesehen, dass dem externen Server eine niedrige Zuverlässigkeit des Fahrzeugnavigationssystems mitgeteilt wird, wenn das von der im Fahrzeug montierten Kamera erzeugte, geografisch kodierte Bild nicht mit geografisch entsprechenden, gespeicherten fotorealistischen Bilddaten für eine aktuelle Position übereinstimmt, sondern eine zuletzt übereinstimmende Straße oder eine nächstliegende Straße in dem von der im Fahrzeug montierten Kamera erzeugten, geografisch kodierten Bild wahrgenommen wird. Mit anderen Worten, wenn das von der im Fahrzeug eingebauten Kamera aufgenommene, geografisch kodierte Bild nicht zur gespeicherten Abbildung für einen aktuellen GPS-Messwert passt, jedoch zu einer gespeicherten Abbildung einer Straße passt, die in der Nähe ist, dann ist der GPS- Messwert ungenau. Auf diese Weise ist es möglich eine niedrige oder nicht ausreichende Zuverlässigkeit des Fahrzeugnavigationssystems mitzuteilen, die mit dem Wetter oder standortabhängigen Faktoren in Zusammenhang steht.

In einer weiteren Ausführungsform der Erfindung ist vorgesehen, dass gefolgert wird, dass sich das Fahrzeug tatsächlich in einer Position abseits der Straße befindet und dass keine Aktualisierung der geografischen Datenbank erforderlich ist, wenn das von der im Fahrzeug montierten Kamera erzeugte, geografisch kodierte Bild nicht mit geografisch entsprechenden, gespeicherten Bilddaten für eine aktuelle Position übereinstimmt und weder eine zuletzt übereinstimmende Straße, noch eine nächstliegende Straße, noch Straßencharakteristiken in dem von der im Fahrzeug montierten Kamera erzeugten, geografisch kodierten Bild wahrgenommen werden.

In einer weiteren Ausführungsform der Erfindung ist vorgesehen, dass auf der Grundlage von Witterungsbedingungen und/oder Lichtverhältnissen überprüft wird, ob das geografisch kodierte Bild mit einer ausreichenden Qualität erzeugt werden kann und, wenn das geografisch kodierte Bild nicht mit einer ausreichenden Qualität erzeugt werden kann, eine weitere Analyse einer gegebenen Position angefordert wird. Die Mitteilung einer Anforderung einer weiteren bzw. einer näheren Analyse einer gegebenen Position umfasst vorzugsweise eine Anforderung von Bildern, die von einem anderen Fahrzeug gemacht werden sollen.

In einer weiteren Ausführungsform der Erfindung ist vorgesehen, dass ein Startort und ein Zielort vom Fahrzeugnavigationssystem an den externen Server geschickt werden, dass mit dem externen Server eine Routenberechnung für das Fahrzeug ausgeführt wird unter Berücksichtigung von neuen Straßen, die von anderen Fahrzeugen zu einer Hauptdatenbank auf dem externen Server hinzugefügt wurden und dass eine berechnete Route vom externen Server zum Fahrzeug geschickt wird. Dies ermöglicht eine Berechnung einer optimalen Route, bei der alle Anomalien berücksichtigt werden, die für das betreffende Gebiet mitgeteilt wurden.

In einer weiteren Ausführungsform der Erfindung ist vorgesehen, dass zusätzlich zur der im Fahrzeug montierten Kamera eine weitere im Fahrzeug montierte Kamera zum Erzeugen von geografisch kodierten Bildern verwendet wird, wobei die Kamera und die weitere Kamera Bilder eines Geländebereichs vor bzw. hinter dem Fahrzeug erfassen.

In einer weiteren Ausführungsform der Erfindung ist vorgesehen, dass zusätzlich zur der im Fahrzeug montierten Kamera mindestens eine weitere im Fahrzeug montierte Kamera zum Erzeugen von geografisch kodierten Bildern verwendet wird, wobei die Kamera Bilder eines Geländebereichs vor oder hinter dem Fahrzeug erfasst und wobei die mindestens eine weitere Kamera Bilder wenigstens eines seitlich vom Fahrzeug liegenden Geländebereichs erfasst. Bei der Verwendung einer Frontkamera, einer Heckkamera und von Seitenkameras ist es daher grundsätzlich möglich Bilder des Geländes auf allen vier Seiten des Fahrzeugs zu machen.

In einer weiteren Ausführungsform der Erfindung ist vorgesehen, dass die Analyse eines geografisch kodierten Bildes eine Suche nach mindestens einer Straßencharakteristik im geografisch kodierten Bild umfasst, wobei die Straßencharakteristik eine Straßenkontur, eine Bordsteinkante, eine Fahrbahnoberflächenmarkierung, ein Verkehrszeichen und/oder ein anderes Fahrzeug sein kann.

In einer weiteren Ausführungsform der Erfindung ist vorgesehen, dass der Schritt, bei dem festgestellt wird, ob sich das Fahrzeug in einer Position auf einer Straße befindet, einen Vergleich von gemessenen Positionsdaten mit gespeicherten Straßenvektordaten umfasst.

In einer weiteren Ausführungsform der Erfindung ist vorgesehen, dass das geografisch kodierte Bild ein Bild eines dem Fahrzeug naheliegenden Geländebereichs und wenigstens eine geografische Koordinate umfasst. Das geografisch kodierte Bild deckt vorzugsweise einen im Wesentlichen trapezförmigen, dem Fahrzeug naheliegenden Geländebereich ab und umfasst vorzugsweise vier geografische Koordinaten, die die vier Eckpunkte des im Wesentlichen trapezförmigen Geländebereichs anzeigen.

In einer weiteren Ausführungsform der Erfindung ist vorgesehen, dass das Fahrzeugnavigationssystem ein Satellitennavigationssystem ist, das eine geografische Datenbank verwendet, die zumindest Straßenvektordaten und fotorealistische Bilddaten enthält.

Es ist weiterhin ein Kraftfahrzeug mit einem Fahrzeugnavigationssystem und einer aktualisierbaren geografischen Datenbank offenbart, wobei in dem Navigationssystem oder dem Fahrzeug eine Kamera oder ein Bildsensor vorhanden ist, der zur Erzeugung mindestens eines Bildes dient. Weiterhin vorhanden sind Mittel zur geografischen Kodierung des Bildes sowie Mittel zur Analyse des Bildes zur Erzielung eines Analyseergebnisses und Mittel zum Vergleich des Analyseergebnisses mit den Daten der Datenbank zur Feststellung einer aktualisierbaren Information der geografischen Datenbank.

Der Aufbau und die Funktion des Gegenstandes der Erfindung sowie weitere Aufgaben und Vorteile der Erfindung ergeben sich aus der nachfolgenden Beschreibung einzelner Ausführungsformen in Kombination mit den Zeichnungen.
- Fig. 1: ist eine schematische Darstellung einer Kartenansicht zur Veranschaulichung eines Fahrzeugs in einer Position abseits der Straße, wobei das Fahrzeugnavigationssystem die Position abseits der Straße korrekt anzeigt;
- Fig. 2: ist eine schematische Darstellung von Kartenansichten zur Veranschaulichung des Verfahrens zum Aktualisieren einer Straßenkartenvektordatenbank gemäß der Erfindung, wobei die linke Seite der Figur eine Situation vor der Aktualisierung der Straßenkartenvektordatenbank zeigt und wobei die rechte Seite der Figur die Situation nach dem Aktualisieren der Straßenkartenvektordatenbank zeigt;
- Fig. 3: ist eine schematische Darstellung einer Kartenansicht zur Veranschaulichung eines Fahrzeugs, das sich auf einer Straße befindet, wobei das Fahrzeugnavigationssystem auf Grund eines Driftfehlers, der den Messwert des Fahrzeugnavigationssystems beeinflusst, für das Fahrzeug eine Position abseits der Straße anzeigt;
- Fig. 4: ist eine schematische Darstellung von Kartenansichten zur Veranschaulichung des Verfahrens zum Aktualisieren einer fotorealistischen Bilddatenbank, wobei die linke Seite der Figur eine Situation vor der Aktualisierung der fotorealistischen Bilddatenbank zeigt und wobei die rechte Seite der Figur die Situation nach dem Aktualisieren der fotorealistischen Bilddatenbank zeigt;
- Fig. 5: ist ein Flussdiagramm zur Veranschaulichung der erfindungsgemäßen Schritte für die Erfassung, Analyse und Mitteilung von Anomalien;
- Fig. 6: ist eine schematische Draufsicht eines Fahrzeugs, das ein geografisch kodiertes Bild gemäß der Erfindung erzeugt; und
- Fig. 7: ist eine schematische Darstellung zur Veranschaulichung einer erfindungsgemäßen Kommunikation zwischen einem Fahrzeug und einem Server.

Das erfindungsgemäße Verfahren zum Aktualisieren einer Datenbank wird im Folgenden unter Bezugnahme auf die Figuren im Detail beschrieben. Die vorliegende Erfindung schafft ein Verfahren zum Aktualisieren von geografischen Datenbanken, Satellitenbilddatenbanken und/oder Luftbilddatenbanken zur Verwendung in Karten im Allgemeinen und zur Verwendung in Fahrzeugnavigationssystemen im Besonderen. Bei der Beschreibung der bevorzugten Ausführungsformen wird angenommen, dass sich die Bilddatenbanken in einem Fernspeichermedium befinden, das auch als Server bezeichnet wird, und dass das Fahrzeug Daten von diesem Server je nach Bedarf drahtlos herunterladen muss, um die entsprechenden Karten zu erzeugen. Das Kernkonzept der Erfindung kann jedoch in gleicher Weise bei herkömmlichen Fahrzeugnavigationssystemen angewandt werden.

Wie oben erwähnt, enthalten geografische Datenbanken eine geografische Darstellung der Straßen in der Form einer Straßenkartenvektordatenbank. Geografische Datenbanken können weiterhin Geschwindigkeitsbegrenzungen auf den Straßen, Wendeverbote und andere Informationen, die sich auf die Straßen beziehen, enthalten. Geografische Datenbanken können auch Orte von Interesse (Points of Interest) wie beispielsweise Hotels, Restaurants und Tankstellen enthalten. Wie oben bereits erwähnt, muss die Information in diesen geografischen Datenbanken ständig aktualisiert werden. Wie im Folgenden genauer beschrieben wird, verbessert die vorliegende Erfindung den Prozess der Aktualisierung einer geografischen Datenbank durch Kombinieren des Vorgangs der Erfassung einer Anomalie mit dem Beschaffen und Mitteilen nützlicher Vor-Ort-Information, um das Vertrauensniveau der Anomaliemitteilung zu erhöhen und letztendlich um festzustellen, ob eine Bilddatenbank veraltet ist und aktualisiert werden muss oder nicht. Die vorliegende Erfindung verbessert den Prozess eine geografische Datenbank zu aktualisieren weiterhin dadurch, dass geografisch kodierte Bilder und Informationen über neue Straßen auf eine effiziente und kostengünstige Art beschafft werden.

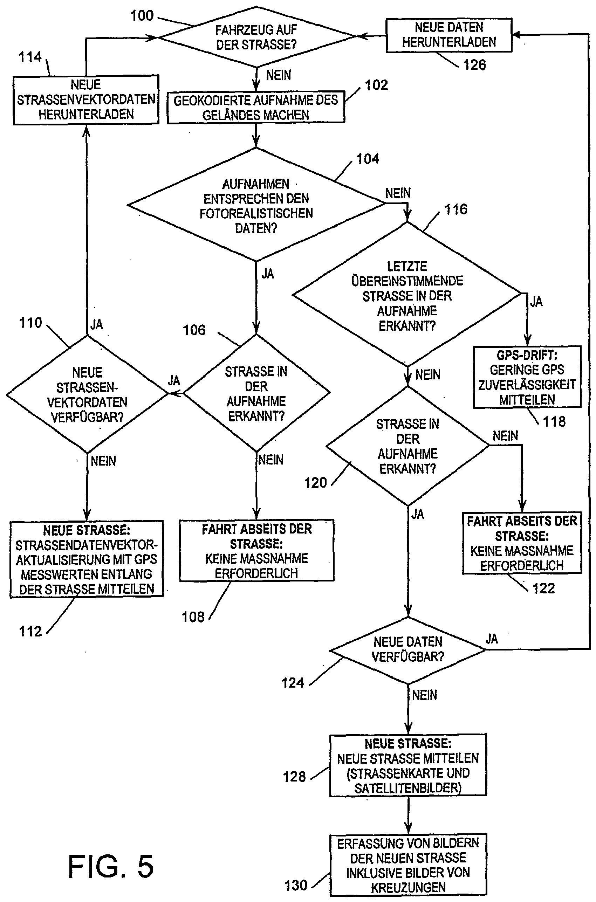

Fig. 5 ist ein Flussdiagramm zur Veranschaulichung von Schritten des erfindungsgemäßen Verfahrens zum Erfassen, Analysieren und Mitteilen von Anomalien wie beispielsweise neue Straßen, eine geringe GPS-Genauigkeit und absichtliches Fahren abseits der Straße. In einem Anfangsschritt 100 wird bestimmt, ob das Fahrzeug "virtuell" auf der Straße fährt oder ob das Fahrzeug abseits der Straße (off-road) fährt, indem der Echtzeit-GPS-Messwert mit den an Bord (im Fahrzeug) verfügbaren Straßenkartenvektordaten verglichen wird. Wenn der Schritt 100 bestimmt, dass das Fahrzeug abseits der Straße fährt, das heißt, wenn sich die vom Fahrzeugnavigationssystem gelieferten geografischen Echtzeitkoordinaten wesentlich von den Koordinaten der letzten übereinstimmenden Straße oder der nächstliegenden Straße unterscheiden, dann wird im Schritt 102 eine geografisch kodierte Momentaufnahme des um das Fahrzeug herumliegenden Geländes gemacht. Die geografisch kodierte Momentaufnahme oder Abbildung wird vorzugsweise mit einer Frontkamera (nach vorne gerichtete Kamera) und/oder einer Heckkamera (nach hinten gerichtete Kamera) des Fahrzeugs erzeugt. Alternativ oder zusätzlich können Kameras an den Seiten des Fahrzeugs oder an anderen geeigneten Montagepunkten befestigt werden. Im Schritt 104 werden dann die geografisch kodierten Bilder, die von der Front- und/oder Heckkamera des Fahrzeugs erzeugt werden, mit für diesen Zweck im Fahrzeug verfügbaren fotorealistischen Bildern desselben geographischen Orts verglichen. Wenn das mit der im Fahrzeug montierten Kamera aufgenommene geografisch kodierte Bild mit den geografisch entsprechenden fotorealistischen Bilddaten übereinstimmt, kann daraus geschlossen werden, dass das Fahrzeugnavigationssystem (GPS) nicht von einem Driftfehler beeinflusst wird. In diesem Fall überprüft das Verfahren, welche der folgenden Optionen wahr ist: Erstens, der Benutzer kann absichtlich abseits der Straße fahren, wie dies mit dem Schritt 108 angezeigt wird. Zweitens, die Straßenkartendaten, die als eine Kartendatenbank im Fahrzeug verfügbar sind, können veraltet sein, wie dies mit den Schritten 110 und 114 gezeigt wird. Drittens, es kann eine neue Straße geben, die mitgeteilt werden soll, wie im Schritt 112 gezeigt ist.

In Schritt 106 werden die Momentaufnahmen, d.h. die geografisch kodierten Bilder, analysiert indem nach Straßenmustern gesucht wird, um festzustellen, ob es eine vorausliegende Straße gibt. Straßenmuster können zum Beispiel Linien, Kurven, andere Fahrzeuge, Straßenbelagmarkierungen und Verkehrszeichen umfassen. Zusätzlich können Bordsensoren, die in der Lage sind Radarwellen oder Ultraschallwellen zu detektieren, sowie andere herkömmliche Verfahren optional oder in Kombination mit der Analyse der Momentaufnahmen verwendet werden, um festzustellen, ob eine vorausliegende Straße existiert. Wenn im Schritt 106 keine Straße wahrgenommen wird, dann fährt der Benutzer abseits der Straße und es sollen keine Maßnahmen ergriffen werden, wie dies in Schritt 108 gezeigt ist. Wenn in Schritt 106 eine Straße wahrgenommen wird, dann sind entweder die im Fahrzeug für dieses spezielle Gebiet verfügbaren Straßenkartenvektordaten veraltet, in diesem Fall sollten, wie in Schritt 114 gezeigt, neue Daten vom Server heruntergeladen werden, oder aber, es wurde eine neue Straße wahrgenommen, die mitgeteilt werden sollte, wie dies in Schritt 112 gezeigt ist. In diesem Fall ist zu beachten, dass nur die Straßenkartenvektordatenbank aktualisiert werden sollte, da die fotorealistischen Daten gut mit den Momentaufnahmen (Schritt 104) übereinstimmen. Die Mitteilung bzw. der Bericht über diese neue Straße sollte die GPS-Messwerte entlang der neuen Straße enthalten, bis zu dem Punkt, an dem das Fahrzeug wieder auf eine bekannte Straße trifft, d.h. auf eine Straße, die in der im Fahrzeug vorhandenen Straßenkartenvektordatenbank definiert ist. Um das Vertrauensniveau (statistische Sicherheit) des Berichts zu erhöhen, können weiterhin die Daten und Ergebnisse, die bei der Durchführung der Verfahrensschritte gewonnen werden, die die Analyse der Momentaufnahmen der Umgebung umfassen, und die Datensätze der für die Straßendetektion verwendeten Sensoren in den Bericht mit aufgenommen werden.

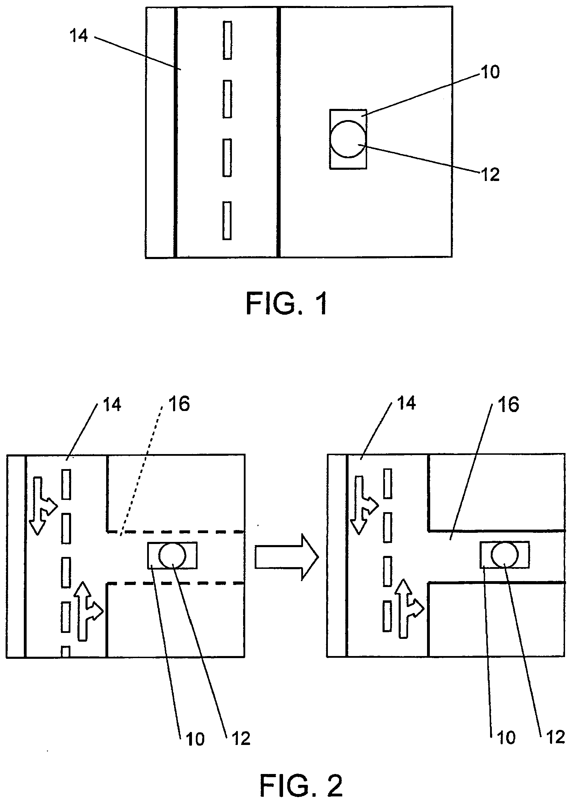

Die zwei oben beschriebenen anfänglichen Anomalien, und zwar ein tatsächliches Fahren abseits der Straße und das Vorhandensein einer neuen Straße, werden im Folgenden ausführlicher unter Bezugnahme auf Fig. 1 und Fig. 2 erklärt. Fig. 1 ist eine Kartenansicht zur Veranschaulichung eines Fahrzeugs in einer Position abseits der Straße, wobei das Fahrzeugnavigationssystem (Bordnavigationssystem) die Position abseits der Straße richtig anzeigt. Fig. 2 zeigt Kartenansichten zur Veranschaulichung des Prozesses der Aktualisierung einer Straßenkartenvektordatenbank, wobei die linke Seite der Fig. 2 die Situation vor der Aktualisierung der Straßenkartenvektordatenbank zeigt und wobei die rechte Seite der Fig. 2 die Situation zeigt, nachdem die Straßenkartenvektordatenbank aktualisiert worden ist. Im Einzelnen repräsentiert das Rechteck 10 in Fig. 1 und Fig. 2 die tatsächliche Position (tatsächlicher Standort) des Fahrzeugs. Der Kreis 12 repräsentiert den Messwert des Fahrzeugnavigationssystems für die Position des Fahrzeugs. Fig. 1 zeigt schematisch den Fall, in dem der Benutzer zum Beispiel absichtlich abseits der Straße fährt. Dies kann in Fig. 1 daran erkannt werden, dass der Kreis 12, der den Messwert des Fahrzeugnavigationssystems anzeigt, gut mit dem Rechteck 10, das den Standort des Fahrzeugs anzeigt, übereinstimmt und daran, dass die tatsächliche Fahrzeugposition 12 nicht auf der Straße 14 ist.

Fig. 2 zeigt den Fall, bei dem das Fahrzeug auf einer neuen Straße 16 fährt, die nicht in der Straßenvektordatenbank des Fahrzeugnavigationssystems definiert ist. Die neue Straße 16 ist im linken Teil der Fig. 2 mit gestrichelten Linien gekennzeichnet, um zu zeigen, dass die neue Straße nicht in der Straßenvektordatenbank des Fahrzeugnavigationssystems definiert ist. Die neue Straße 16 wird der Straßenkartenvektordatenbank des Fahrzeugnavigationssystems hinzugefügt, nachdem die neue Straße 16 mitgeteilt wurde oder aktualisierte Straßenvektordaten heruntergeladen wurden. Nachdem die neue Straße 16 in der Straßenvektordatenbank der Fahrzeugdatenbank (Borddatenbank) definiert ist, wird die neue Straße 16 mit durchgezogenen Linien dargestellt, wie dies im rechten Teil der Fig. 2 gezeigt ist. Die grafische Darstellung einer neuen Straße, die noch nicht in der Straßenvektordatenbank der Fahrzeugdatenbank definiert ist, wird auf dem Bildschirm des Fahrzeugnavigationssystems vorzugsweise in einer Farbe dargestellt, die sich von der Farbe der Straßen, die in der Straßenvektordatenbank der Fahrzeugdatenbank definiert sind, unterscheidet.

Wie aus dem in Fig. 5 gezeigten Ablaufdiagramm ersichtlich ist, sind auch die folgenden Situationen möglich. Wenn im Schritt 100 festgestellt wurde, das sich das Fahrzeug "virtuell" nicht auf einer Straße befindet, wobei dies durch Vergleichen des GPS-Messwerts des Fahrzeugnavigationssystems mit der im Fahrzeug verfügbaren Straßenkartenvektordatenbank bestimmt wird, wird in Schritt 102 mit den Front- und/oder Heckkameras des Fahrzeugs ein geografisch kodiertes Bild, d.h. eine Kameramomentaufnahme, der Umgebung erzeugt. Alternativ oder zusätzlich können Kameras an anderen geeigneten Montagepunkten, beispielsweise an den Seiten des Fahrzeugs, montiert werden. Wenn, wie in Schritt 104 angedeutet ist, die mit den Kameras im Schritt 102 erzeugten geografisch kodierten Bilder nicht mit den für denselben Ort verfügbaren fotorealistischen Bilddaten übereinstimmen, sind die folgenden Optionen denkbar: Erstens, das Fahrzeugnavigationssystem ist von einem Driftfehler betroffen, d.h. das GPS liefert ungenaue Daten und deshalb vergleicht das System Bilder von zwei verschiedenen Orten. Zweitens, der Benutzer fährt abseits der Straße und das von der Kamera aufgenommene geografisch kodierte Bild zeigt beispielsweise den ungeteerten Randstreifen oder Seitenstreifen der Straße, der sich lediglich geändert hat, weil es im Frühjahr möglicherweise grünes Grass, im Sommer Erde und im Winter Schnee gibt. Drittens, die Daten im Fahrzeug sind alt und müssen aktualisiert werden. Die Aktualisierung betrifft sowohl die fotorealistischen Bilddaten als auch die Straßenvektordaten. Viertens, eine neue Straße wurde erkannt und sollte mitgeteilt werden. In diesem Fall, sollten sowohl Daten für die fotorealistischen Bilder als auch für die Straßenvektoren gesammelt werden.

Um festzustellen, ob das Fahrzeugnavigationssystem von einem Driftfehler betroffen ist, nachdem in Schritt 104 bestätigt worden ist, dass die geografisch kodierten Bilder der Momentaufnahmen der Umgebung des Fahrzeugs nicht mit den gespeicherten fotorealistischen Bildern für den vom Fahrzeugnavigationssystem angegebenen Ort übereinstimmen, sollte, wie in Schritt 116 gezeigt ist, festgestellt werden, ob das Fahrzeug immer noch auf der letzten übereinstimmenden (zuletzt erkannten) Straße ist oder auf einer zuvor übereinstimmenden Straße ist. Um festzustellen, ob das Fahrzeug immer noch auf der letzten übereinstimmenden Straße oder auf einer zuvor übereinstimmenden Straße ist, sollten Koppelnavigationsverfahren, die Sensorinformation wie Geschwindigkeit, Radwinkel und Kompassdaten verwenden können, den vom Fahrzeugnavigationssystem gelieferten GPS-Daten gegenübergestellt werden. Weiterhin können die Bildmomentaufnahmen mit den gespeicherten fotorealistischen Bildern für den berechneten Ort entlang vorheriger Straßenabschnitte verglichen werden, wobei angenommen wird, dass das Fahrzeug immer noch auf dieser Straße ist und wobei Geschwindigkeitsdaten des Fahrzeugs verwendet werden. Wenn im Schritt 116 bestimmt wird, dass das Auto immer noch auf einem der vorherigen Straßenabschnitte ist, sollte eine Mitteilung über eine geringe GPS Zuverlässigkeit an diesem Ort erfolgen, wie in Schritt 118 gezeigt ist. Der Bericht kann den Ort der Anomalie und auch die Datensätze enthalten, die bei der Berechnung verwendet werden, um das Vertrauensniveau zu erhöhen.

Wenn in Schritt 116 durch Vergleichen von GPS-Daten mit Koppelnavigationsverfahren festgestellt wird, dass sich das Fahrzeug nicht auf der vorhergehenden Straße befindet, kann es sein, dass der Benutzer absichtlich abseits der Straße fährt. Dies ist der Fall, wenn in Schritt 120 keine Straßen in den von im Fahrzeug eingebauten Kameras erzeugten Bildmomentaufnahmen erkannt werden und/oder keine Straßen mit Hilfe von ergänzenden Straßenerkennungsverfahren wahrgenommen werden. Wenn der Benutzer abseits der Straße fährt, sollen keine Maßnahmen ergriffen werden, wie dies in Schritt 122 gezeigt ist.

Schließlich, wenn in Schritt 120 eine Straße detektiert wird, soll das System zuerst im Schritt 124 überprüfen, ob eine neuere Version der Daten für die Straßenkartenvektoren und für die fotorealistischen Bilder für diesen Ort auf dem Server verfügbar sind. Falls eine Aktualisierung (Update) verfügbar ist, sollte das Fahrzeug die neuen Daten im Schritt 126 herunterladen. Wenn Schritt 124 bestimmt, dass keine neuen Daten zum Herunterladen verfügbar sind, sollte das System eine neue Straße mitteilen, wie dies im Schritt 128 gezeigt ist. Diese Mitteilung sollte GPS-Messwerte entlang der neuen Straße enthalten, bis zu dem Punkt, an dem das Fahrzeug auf eine bekannte Straße trifft, d.h. auf eine in der Straßenkartenvektordatenbank des Fahrzeugs definierten Straße. Die Mitteilung sollte weiterhin geografisch kodierte Momentaufnahmebilder der Straße in bestimmten berechneten Abständen enthalten, sodass die neue Straße vollständig abgedeckt ist. Die Entfernung zwischen den Momentaufnahmen hängt hauptsächlich von den Spezifikationen der Kamera ab und von der Art und Weise wie die Kamera im Fahrzeug montiert ist. Mit anderen Worten hängt sie vom Bereich der Straße ab, der von der Kamera mit einer Bildaufnahme erfassbar bzw. abdeckbar ist. Die Mitteilung über die neue Straße sollte weiterhin einen Nachweis enthalten, um zu zeigen, warum die Anomalie in die Kategorie "neue Straße" passt. Der Nachweis würde generell Datensätze umfassen, die zum Ausführen der Verfahrensschritte verwendet werden. Außerdem sollte eine Anforderung bezüglich Bildern an allen Kreuzungen zwischen bekannten Straßen und der neuen Straße mitgeteilt werden, da es wahrscheinlich ist, dass neue Straßenbelagsmarkierungen wie beispielsweise Wendeverbotszeichen oder andere Zeichen auf die Straße gemalt worden sind. Weiterhin sollten Straßennamen bzw. Straßenschilder, Verkehrszeichen und andere nützliche Informationen, die normalerweise an Kreuzungen vorhanden sind, fotografiert werden. Der Schritt zur Erfassung der Bilddaten ist in Fig. 5 durch Schritt 130 angedeutet.

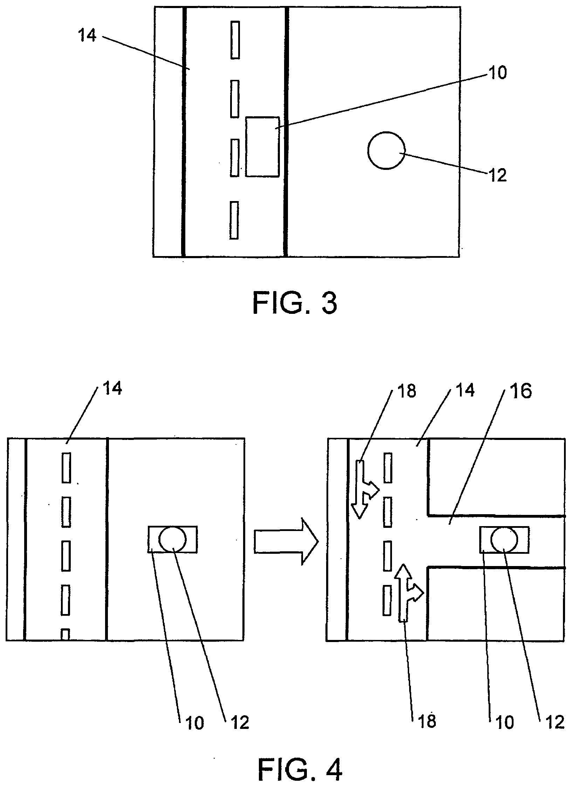

Fig. 3 ist eine schematische Darstellung einer Kartenansicht zur Veranschaulichung eines Fahrzeugs, das sich auf einer Straße befindet, wobei das Fahrzeugnavigationssystem auf Grund eines Driftfehlers, der die Messwerte des Fahrzeugnavigationssystems beeinflusst, für das Fahrzeug fälschlicherweise eine Position abseits der Straße anzeigt. Die tatsächliche Position des Fahrzeugs auf der Straße 14 wird mit einem Rechteck 10 dargestellt. Ein Kreis 12 stellt den Messwert des Fahrzeugnavigationssystems für die Position des Fahrzeugs dar, wobei der Messwert auf Grund eines Driftfehlers in diesem Fall ungenau ist. Die in Fig. 3 gezeigte Situation entspricht der Situation des Schritts 118 in Fig. 5.

Fig. 4 zeigt eine schematische Darstellung von Kartenansichten zur Veranschaulichung des Vorgangs der Aktualisierung einer fotorealistischen Bilddatenbank, wobei die linke Seite der Fig. 4 eine Situation vor der Aktualisierung der fotorealistischen Bilddatenbank zeigt, und wobei die rechte Seite der Fig. 4 die Situation zeigt, nachdem die fotorealistische Bilddatenbank aktualisiert worden ist. Das Rechteck 10, das in Fig. 4 die tatsächliche Position des Fahrzeugs darstellt, fällt mit dem Kreis 12 zusammen, der den genauen GPS-Messwert darstellt. Der linke Teil der Fig. 4 zeigt, dass die neu wahrgenommene Straße noch nicht in der Straßenkartenvektordatenbank oder der fotorealistischen Bilddatenbank verfügbar ist. Die Kartenansicht im rechten Teil der Fig. 4 zeigt die neue Straße 16 nachdem die Straßenkartenvektordatenbank und die fotorealistische Bilddatenbank aktualisiert worden ist. In diesem Fall umfasst die Aktualisierung eine Aktualisierung der Kreuzung, sodass zum Beispiel die Fahrbahnoberflächenmarkierungen 18 an der Kreuzung zwischen der bekannten Straße 14 und der neuen Straße 16 als Aktualisierungsinformation der Datenbank hinzugefügt worden sind.

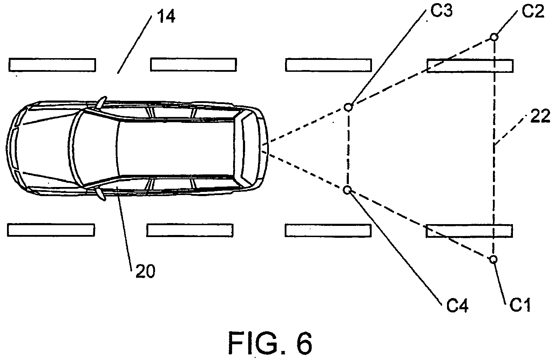

Fig. 6 zeigt eine Draufsicht eines Fahrzeugs 20, das mit einer nach hinten gerichteten, im Fahrzeug eingebauten Kamera ein geografisch kodiertes Bild erzeugt. Fig. 6 zeigt wie ein Aufnahmebild geografisch beschrieben bzw. definiert werden kann. Da die Form des sich ergebenden Aufnahmebildes ein Trapez 22 auf der Straße 14 darstellt, sind zur Beschreibung der Bildaufnahme vier Koordinaten C1, C2, C3 und C4 erforderlich.

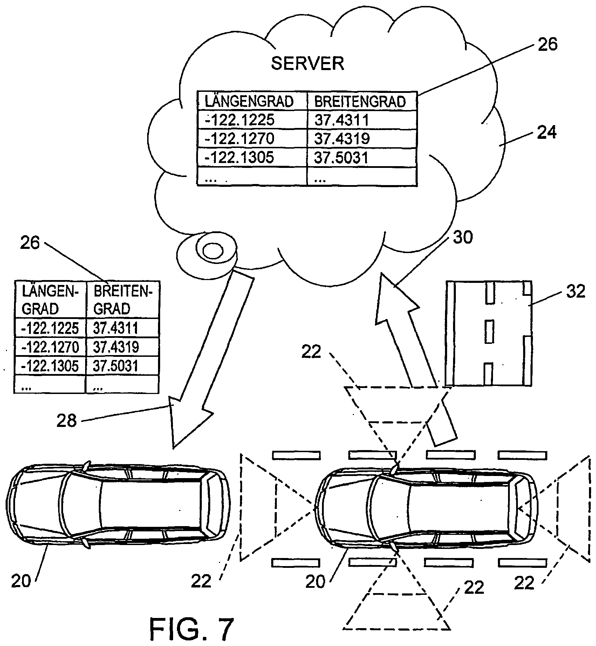

Fig. 7 ist eine schematische Darstellung zur Veranschaulichung einer Kommunikation zwischen einem Fahrzeug 20 und einem Server 24. Fig. 7 zeigt in schematischer Weise wie das Fahrzeug 20 mit dem Server 24 kommunizieren kann, um eine aktuelle Liste der Anomalieorte 26 für ein bestimmtes Gebiet zu bekommen. Der Pfeil 28, der vom Server 24 zum Fahrzeug 20 zeigt, deutet in diesem Fall ein Herunterladen einer Liste von Anomalieorten 26 an. Wenn das Fahrzeug 20 an irgendeinem dieser Orte fährt und die Lichtverhältnisse sowie die Witterungsbedingungen so sind, dass Aufnahmebilder mit einer für die erforderliche Bildanalyse ausreichenden Qualität gemacht werden können, sollte das Fahrzeug 20 vor Ort Bilder machen, wie es in der relevanten Mitteilung gewünscht ist und an den Server 24 schicken. Der Pfeil 30, der vom Fahrzeug 20 zum Server 24 zeigt, deutet ein Hochladen geografisch kodierter Bilddaten 32 vom Fahrzeug zum Server 24 an.

Das erfindungsgemäße Verfahren zum Aktualisieren einer Datenbank ist insbesondere für Witterungsbedingungen und Lichtverhältnisse geeignet, die zu Aufnahmebildern von ausreichender Qualität führen, da das Verfahren auf eine Bildanalyse angewiesen ist. Wenn schlechtes Wetter oder zu wenig Licht zu Bildern mit einer unzureichenden Qualität für einen bestimmten Standort führen, sollte das Fahrzeug in der Lage sein die Anomalie zusammen mit einer Anforderung für eine weitere Analyse oder einer Anforderung von Bildern zu berichten. Wenn ein anderes Fahrzeug an diesem Ort vorbeifährt und die Bedingungen zum Erzeugen von geografisch kodierten Bildern besser geworden sind, sollte das Fahrzeug geografisch kodierte Momentaufnahmen des Gebiets machen und sie als Zusatz für dem bereits vorhandenen Bericht mitteilen.

Wenn eine neue Straße mit einem hohen Vertrauensniveau wahrgenommen wird, kann sie direkt in das Fahrzeugnavigationssystem des Benutzers, das eine solche neue Straße berichtet hat, aufgenommen werden. Neue Straßen können, bis sie in der Hauptdatenbank bestätigt und aktualisiert sind, auf der Karte eine charakteristische Farbe haben. Nachdem die neue Straße bestätigt worden ist, wird der Status und die charakteristische Farbe der neuen Straße geändert, wobei die Farbe dann einen bestimmten Straßentyp repräsentiert.

Gemäß einer Ausführungsform der Erfindung kann die Routenberechnung extern auf dem Server ausgeführt werden. Eine externe Routenberechnung wäre effizienter, genauer und zuverlässiger als die Routenberechnung mit Bordmitteln, da alle neuen Straßen für die Routenberechnung berücksichtigt werden können. Um die externe Routenberechnung auszuführen, werden der Startort und das gewünschte Ziel an den Server gesandt. Der Server berechnet dann den optimalen Weg, wobei alle Anomalien berücksichtigt werden, die für den zugehörigen Kartenbereich mitgeteilt wurden. Nachdem die Route berechnet worden ist, wird das Berechnungsergebnis zurück an das Fahrzeug geschickt.

Angesichts des oben beschriebenen Verfahrens zum Aktualisieren einer Datenbank wird deutlich, dass das Verfahren die folgenden wesentlichen Vorzüge gegenüber herkömmlichen Verfahren hat. Zunächst wird eine Aktualisierung von Straßenkartenvektordatenbanken sowie eine Aktualisierung von Satelliten- und/oder Luftbilddatenbanken effizienter gemacht. Insbesondere wird eine Aktualisierung von im Fahrzeug verfügbaren Daten (Borddaten) effizienter gemacht. Weiterhin kann die Genauigkeit eines Fahrzeugnavigationssystems gemessen werden, und deshalb kann die Genauigkeit von Fahrzeugnavigationssystemen in Bezug auf einen Ort, Witterungsbedingungen oder anderen Bedingungen, die die Genauigkeit von GPS-Messwerten beeinflussen, vorhergesagt werden. Schließlich stellt das erfindungsgemäße Verfahren sicher, dass die Kartendaten ständig aktualisiert werden, und die Daten sind deshalb so aktuell wie möglich.

Ein charakteristisches Merkmal einer Ausführungsform der Erfindung ist, dass eine Anomaliemitteilung über eine neue Straße erstellt wird. Die Anomaliemitteilung über eine neue Straße enthält typischerweise GPS-Messwerte entlang der neuen Straße, geografisch kodierte Aufnahmebilder der Umgebung eines Fahrzeugs entlang der neuen Straße, wobei im Fahrzeug eingebaute Kameras verwendet werden, Datums- und Zeitinformation, lokale Witterungsbedingungen und/oder Lichtverhältnisse und einen Datensatz der die Straßenerfassung unterstützenden Systeme, wie beispielsweise Radarsensoren und Ultraschallsensoren.

Ein weiteres charakteristisches Merkmal einer Ausführungsform der Erfindung ist, dass eine Anomaliemitteilung über eine geringe GPS-Genauigkeit erstellt wird. Die Anomaliemitteilung über eine geringe GPS-Genauigkeit enthält typischerweise GPS-Messwerte, geografisch kodierte Aufnahmebilder der Umgebung des Fahrzeugs, insbesondere Aufnahmebilder der Straße, die mit im Fahrzeug eingebauten Kameras gemacht werden, Datums- und Zeitinformation, lokale Witterungsbedingungen und/oder Lichtverhältnisse und einen Datensatz der die Straßenerfassung unterstützenden Systeme.

Ein weiteres charakteristisches Merkmal einer Ausführungsform der Erfindung ist, dass eine Erfassung einer neuen Straße ausgeführt wird, wobei fotorealistische Bilder und/oder Straßenkartenvektordaten, die im Fahrzeug verfügbar sind, Bildaufnahmen der Umgebung des Fahrzeugs, insbesondere Bildaufnahmen von Straßen, Messwerte des Fahrzeug GPS und Information, die von den die Straßenerfassung unterstützenden Systemen geliefert wird, verwendet werden. Ein weiteres charakteristisches Merkmal einer Ausführungsform der Erfindung ist, dass fotorealistische Bilder einer neuen Straße, die mit Hilfe von im Fahrzeug eingebauten Front- und Heckkameras gemacht werden, vom Fahrzeug auf einen Server hochgeladen werden.

Ein weiteres Merkmal ist, dass eine Bilddatenanforderung für neue Bilddaten gemacht werden kann auf der Grundlage von fotorealistischen Bildern und/oder von im Fahrzeug verfügbaren Straßenkartendaten, Aufnahmebildern der Fahrzeugumgebung, GPS-Messwerten des Fahrzeugnavigationssystems und Information, die von den die Straßenerfassung unterstützenden Systemen geliefert wird. Gemäß einem weiteren Merkmal können neue Bilddaten von einem Server auf das Fahrzeug heruntergeladen werden auf der Grundlage von fotorealistischen Bildern und/oder von im Fahrzeug verfügbaren Straßenkartendaten, Aufnahmebildern der Fahrzeugumgebung, GPS-Messwerten des Fahrzeugnavigationssystems und Information, die von den die Straßenerfassung unterstützenden Systemen geliefert wird. Ein weiteres charakteristisches Merkmal einer Ausführungsform der Erfindung ist, dass neue Straßen, abhängig vom Vertrauensniveau der Mitteilung der neuen Straßen, vorübergehend oder vorläufig der Datenbank des Navigationssystems des Fahrzeugs hinzugefügt werden können, das solche neuen Straßen wahrnimmt. Gemäß einem weiteren Merkmal wird der vorübergehende oder vorläufige Status einer neuen Straße in einen endgültigen Status abgeändert, wenn die neue Straße bestätigt wird und in der Hauptdatenbank des Servers gespeichert wird. Wenn die neue Straße nicht bestätigt wird und/oder in der Hauptdatenbank auf dem Server gelöscht wird, wird auch die vorübergehend eingetragene Straße gelöscht.

### Bezugszeichenliste

- 10: tatsächliche Position des Fahrzeugs
- 12: gemessene Position des Fahrzeugs
- 14: Straße
- 16: neue Straße
- 18: Straßenbelagsmarkierung
- 20: Fahrzeug
- 22: trapezförmiger Bildaufnahmebereich
- 24: Server
- 26: Liste der Orte mit Anomalien
- 28, 30: Pfeile zur Illustration des Herunterladens und Hochladens von Information
- 32: geografisch kodierte Bilddaten
- 100 - 130: Verfahrensschritte
- C1 - C4: Eckpunkte des trapezförmigen Bildaufnahmebereichs

## Patentansprüche

1. Verfahren zum Aktualisieren einer geografischen Datenbank, bei dem basierend auf von einem Fahrzeugnavigationssystem gelieferter Information festgestellt wird, ob sich ein Fahrzeug (20) in einer Position auf einer Straße (14) befindet (100), wobei unter Verwendung einer im Fahrzeug montierten Kamera ein geografisch kodiertes Bild erzeugt wird (102), falls, gemäß der vom Fahrzeugnavigationssystem gelieferten Information, sich das Fahrzeug nicht in einer Position auf der Straße befindet, und dass das mit Hilfe der im Fahrzeug montierten Kamera erzeugte, geografisch kodierte Bild analysiert wird, um festzustellen, ob eine Aktualisierung der geografischen Datenbank erforderlich ist, **dadurch gekennzeichnet, dass**
die Analyse des von der im Fahrzeug montierten Kamera erzeugten, geografisch kodierten Bildes einen Vergleich des geografisch kodierten Bildes mit gespeicherten fotorealistischen Bilddaten umfasst (104), wobei überprüft wird, ob auf einem externen Server neue Daten zum
Herunterladen verfügbar sind (124), wenn in dem von der im Fahrzeug montierten Kamera erzeugten, geografisch kodierten Bild Straßencharakteristiken wahrgenommen werden (120), jedoch das von der im Fahrzeug montierten Kamera erzeugte, geografisch kodierte Bild nicht mit geografisch entsprechenden, gespeicherten Bilddaten für eine aktuelle Position übereinstimmt (104) und weiterhin weder eine zuletzt übereinstimmende Straße noch eine nächstliegende Straße in dem geografisch kodierten Bild wahrgenommen wird (116), wobei neue Daten heruntergeladen werden (126), wenn auf dem externen Server neue Daten zum Herunterladen verfügbar sind, wobei auf der Grundlage der im geografisch kodierten Bild wahrgenommenen Straßencharakteristiken die Existenz einer neuen Straße dem externen Server mitgeteilt wird (128), wenn auf dem externen Server keine neuen Daten zum
Herunterladen verfügbar sind, und wobei mit Hilfe der im Fahrzeug montierten Kamera geografisch kodierte Bilder der neuen Straße erzeugt werden (130), und wobei eine neue Straße direkt einer Datenbank des Fahrzeugnavigationssystems zugefügt wird, wenn die neue Straße mit einem gegebenen Vertrauensniveau wahrgenommen wird.

2. Verfahren nach Anspruch 1, **dadurch gekennzeichnet, dass** das von der im Fahrzeug montierten Kamera erzeugte, geografisch kodierte Bild analysiert wird, um Straßencharakteristiken im geografisch kodierten Bild zu erfassen (106), wenn das geografisch kodierte Bild mit geografisch entsprechenden Bilddaten übereinstimmt, die als fotorealistische Bilddaten gespeichert sind (104), und dass gefolgert wird, dass sich das Fahrzeug tatsächlich in einer Position abseits der Straße befindet und keine Aktualisierung der geografischen Datenbank erforderlich ist, wenn in dem von der im Fahrzeug montierten Kamera erzeugten, geografisch kodierten Bild keine Straße wahrgenommen wird (108).

3. Verfahren nach wenigstens einem der vorhergehenden Ansprüche, **dadurch gekennzeichnet, dass** bei der Überprüfung, ob auf dem externen Server neue Daten zum Herunterladen verfügbar sind, überprüft wird, ob auf dem externen Server neue
Straßenvektordaten verfügbar sind (110), und dass, wenn neue Straßenvektordaten auf dem externen Server verfügbar sind, die neuen Straßenvektordaten vom externen Server heruntergeladen werden (114).

4. Verfahren nach Anspruch 3, **dadurch gekennzeichnet, dass** dem externen Server, auf der Grundlage von Messwerten, die vom
Fahrzeugnavigationssystem beim Befahren der wahrgenommenen Straße geliefert werden, eine Straßenvektoraktualisierung mitgeteilt wird (112), wenn keine neuen Straßenvektordaten auf dem externen Server verfügbar sind (110).

5. Verfahren nach Anspruch 1, **dadurch gekennzeichnet, dass** dem externen Server eine niedrige Zuverlässigkeit
des Fahrzeugnavigationssystems mitgeteilt wird (118), wenn das von der im Fahrzeug montierten Kamera erzeugte, geografisch kodierte Bild nicht mit geografisch entsprechenden, gespeicherten fotorealistischen Bilddaten für eine aktuelle Position übereinstimmt (104), sondern eine zuletzt übereinstimmende Straße oder eine nächstliegende Straße in dem von der im Fahrzeug montierten Kamera erzeugten, geografisch kodierten Bild wahrgenommen wird (116).

6. Verfahren nach Anspruch 1, **dadurch gekennzeichnet, dass** gefolgert wird, dass sich das Fahrzeug tatsächlich in einer Position abseits der Straße befindet und dass keine Aktualisierung der geografischen Datenbank erforderlich ist (122), wenn das von der im Fahrzeug montierten Kamera erzeugte, geografisch kodierte Bild nicht mit geografisch entsprechenden, gespeicherten Bilddaten für eine aktuelle Position übereinstimmt (104) und weder eine zuletzt übereinstimmende Straße, noch eine nächstliegende Straße, noch Straßencharakteristiken in dem von der im Fahrzeug montierten Kamera erzeugten, geografisch kodierten Bild wahrgenommen werden (116, 120).

7. Verfahren nach Anspruch 1, **dadurch gekennzeichnet, dass** die Erzeugung der geografisch kodierten Bilder der neuen Straße eine Erzeugung geografisch kodierter Bilder einer Kreuzung zwischen der neuen Straße und einer bekannten Straße umfasst.

8. Verfahren nach wenigstens einem der vorhergehenden Ansprüche, **dadurch gekennzeichnet, dass** auf der Grundlage von Witterungsbedingungen und/oder Lichtverhältnissen überprüft wird, ob das geografisch kodierte Bild mit einer ausreichenden Qualität erzeugt werden kann und, wenn das geografisch kodierte Bild nicht mit einer ausreichenden Qualität erzeugt werden kann, dem externen Server eine Anforderung einer
weiteren Analyse einer gegebenen Position mitgeteilt wird.

9. Verfahren nach Anspruch 8, **dadurch gekennzeichnet, dass** die Mitteilung der Anforderung einer weiteren Analyse einer gegebenen Position eine Anforderung von Bildern umfasst, die von einem anderen Fahrzeug gemacht werden sollen.

10. Verfahren nach Anspruch 1, **dadurch gekennzeichnet, dass** die neue Straße von dem Fahrzeugnavigationssystem als eine unbestätigte Straße angezeigt wird, bis die neue Straße in einer Hauptdatenbank des externen Servers bestätigt und aktualisiert wird.

11. Verfahren nach wenigstens einem der vorhergehenden Ansprüche, **dadurch gekennzeichnet, dass** ein Startort und ein Zielort vom Fahrzeugnavigationssystem an den externen Server geschickt werden, dass mit dem externen Server eine Routenberechnung für das Fahrzeug ausgeführt wird unter Berücksichtigung von neuen Straßen, die von anderen Fahrzeugen zu einer Hauptdatenbank auf dem externen Server hinzugefügt wurden und dass eine berechnete Route vom externen Server zum Fahrzeug geschickt wird.

12. Verfahren nach wenigstens einem der vorhergehenden Ansprüche, **dadurch gekennzeichnet, dass** zusätzlich zur der im Fahrzeug montierten Kamera eine weitere im Fahrzeug montierte Kamera zum Erzeugen von geografisch kodierten Bildern verwendet wird, wobei die Kamera und die weitere Kamera Bilder eines Geländebereichs vor bzw. hinter dem Fahrzeug erfassen.

13. Verfahren nach wenigstens einem der vorhergehenden Ansprüche, **dadurch gekennzeichnet, dass** zusätzlich zur der im Fahrzeug montierten Kamera mindestens eine weitere im Fahrzeug montierte Kamera zum Erzeugen von geografisch kodierten Bildern verwendet wird, wobei die Kamera Bilder eines Geländebereichs vor oder hinter dem Fahrzeug erfasst und wobei die mindestens eine weitere Kamera Bilder wenigstens eines seitlich vom Fahrzeug liegenden Geländebereichs erfasst.

14. Verfahren nach wenigstens einem der vorhergehenden Ansprüche, **dadurch gekennzeichnet, dass** die Analyse eines geografisch kodierten Bildes eine Suche nach mindestens einer Straßencharakteristik im geografisch kodierten Bild umfasst, wobei die Straßencharakteristik eine Straßenkontur, eine Bordsteinkante, eine Fahrbahnoberflächenmarkierung, ein Verkehrszeichen und/oder ein anderes Fahrzeug sein kann.

15. Verfahren nach wenigstens einem der vorhergehenden Ansprüche, **dadurch gekennzeichnet, dass** der Schritt, bei dem festgestellt wird, ob sich das Fahrzeug (20) in einer Position auf einer Straße (14) befindet (100), einen Vergleich von gemessenen Positionsdaten mit gespeicherten Straßenvektordaten umfasst.

16. Verfahren nach wenigstens einem der vorhergehenden Ansprüche, **dadurch gekennzeichnet, dass** das geografisch kodierte Bild ein Bild eines dem Fahrzeug naheliegenden Geländebereichs und wenigstens eine geografische Koordinate umfasst.

17. Verfahren nach wenigstens Anspruch 16, **dadurch gekennzeichnet, dass** das geografisch kodierte Bild einen im wesentlichen trapezförmigen, dem Fahrzeug naheliegenden Geländebereich abdeckt und vier geografische Koordinaten umfasst, die die vier Eckpunkte des im wesentlichen trapezförmigen Geländebereich anzeigen.

18. Verfahren nach wenigstens einem der vorhergehenden Ansprüche, **dadurch gekennzeichnet, dass** das Fahrzeugnavigationssystem ein Satellitennavigationssystem ist, das eine geografische Datenbank verwendet, die mindestens Straßenvektordaten und fotorealistische Bilddaten enthält.

## Claims

1. Method for updating a geographic database, wherein, based on information provided by a vehicle navigation system, it is determined (100) whether a vehicle (20) is in a position on a road (14), wherein a geographically coded image is generated (102) using a vehicle-mounted camera, if the vehicle is not in an on-road position according to the information provided by the vehicle navigation system, and the geographically coded image generated by the vehicle-mounted camera is analysed in order to determine whether updating of the geographic database is required, **characterized in that** analysing the geographically coded image generated by the vehicle-mounted camera includes comparing (104) the geographically coded image to stored photorealistic image data, wherein it is checked (124) whether new data are available for downloading on a remote server if road characteristics are detected (120) in the geographically coded image generated by the vehicle-mounted camera but the geographically coded image generated by the vehicle-mounted camera does not match (104) stored geographically corresponding image data for a current position, and furthermore neither a last matched road nor a nearest road is detected (116) in the geographically coded image, wherein new data are downloaded (126) if new data are available for downloading on the remote server, wherein, based on the road characteristics detected in the geographically coded image, an existence of a new road is reported (128) to the remote server if no new data are available for downloading on the remote server, and wherein geographically coded images of the new road are generated (130) using the vehicle-mounted camera, and wherein a new road is added directly to a database of the vehicle navigation system if the new road is detected with a given confidence level.

2. Method according to claim 1, **characterized in that** the geographically coded image generated by the vehicle-mounted camera is analysed in order to detect (106) road characteristics in the geographically coded image, if the geographically coded image matches (104) geographically corresponding image data stored as photorealistic image data, and it is concluded that the vehicle is actually in an off-road position and that no update of the geographic database is required, if no road is detected (108) in the geographically coded image generated by the vehicle-mounted camera.

3. Method according to at least one of the preceding claims, **characterized in that** checking whether new data are available for downloading on the remote server includes checking (110) whether new road vector data are available for downloading on the remote server, and the new road vector data are downloaded (114) from the remote server if new road vector data are available on the remote server.

4. Method according to claim 3, **characterized in that**, based on readings provided by the vehicle navigation system while driving along the road which has been detected, a road vector update is reported (112) to the remote server if no new road vector data are available (110) on the remote server.

5. Method according to claim 1, **characterized in that** a low reliability of the vehicle navigation system is reported (118) to the remote server if the geographically coded image generated by the vehicle-mounted camera does not match (104) geographically corresponding stored photorealistic image data for a current position, but a last matched road or a nearest road is detected (116) in the geographically coded image generated by the vehicle-mounted camera.

6. Method according to claim 1, **characterized in that** it is concluded that the vehicle is actually in an off-road position and that no update of the geographic database is required (122) if the geographically coded image generated by the vehicle-mounted camera does not match (104) geographically corresponding stored image data for a current position and neither a last matched road, nor a nearest road nor road characteristics are detected (116, 120) in the geographically coded image generated by the vehicle-mounted camera.

7. Method according to claim 1, **characterized in that** generating the geographically coded images of the new road includes generating geographically coded images of an intersection between the new road and a known road.

8. Method according to at least one of the preceding claims, **characterized in that** it is checked, based on weather conditions and/or light conditions, whether the geographically coded image can be generated with a sufficient quality, and, if the geographically coded image cannot be generated with a sufficient quality, a request for a further analysis of a given position is reported to the remote server.

9. Method according to claim 8, **characterized in that** reporting the request for a further analysis of a given position includes a request for imagery to be taken by another vehicle.

10. Method according to claim 1, **characterized in that** the new road is displayed by the vehicle navigation system as an unconfirmed road until the new road is confirmed and updated in a main database of the remote server.

11. Method according to at least one of the preceding claims, **characterized in that** a start location and a destination location is sent from the vehicle navigation system to the remote server, a route calculation for the vehicle is performed by the remote server taking into account new roads added by other vehicles to a main database on the remote server, and a calculated route is sent from the remote server to the vehicle.

12. Method according to at least one of the preceding claims, **characterized in that** in addition to the vehicle-mounted camera, a further vehicle-mounted camera is used for generating geographically coded images, wherein the camera and the further camera capture images of a ground area in front of or behind the vehicle.

13. Method according to at least one of the preceding claims, **characterized in that** in addition to the vehicle-mounted camera, at least one further vehicle-mounted camera is used for generating geographically coded images, wherein the camera captures images of a ground area in front of or behind the vehicle, and wherein the at least one further camera captures images of at least a ground area to the side of the vehicle.

14. Method according to at least one of the preceding claims, **characterized in that** analysing the geographically coded image includes searching the geographically coded image for at least one road characteristic, wherein the road characteristic can be a road outline, a kerb, a road surface marking, a traffic sign and/or another vehicle.

15. Method according to at least one of the preceding claims, **characterized in that** the step of determining (100) whether the vehicle (20) is in a position on a road (14) includes comparing measured position data with stored road vector data.

16. Method according to at least one of the preceding claims, **characterized in that** the geographically coded image includes an image of a ground area adjacent to the vehicle and at least one geographic coordinate.

17. Method according to at least claim 16, **characterized in that** the geographically coded image covers a substantially trapezoidal ground area adjacent to the vehicle and includes four geographic coordinates indicating the four corner points of the substantially trapezoidal ground area.

18. Method according to at least one of the preceding claims, **characterized in that** the vehicle navigation system is a satellite navigation system using a geographic database containing at least road vector data and photorealistic image data.

## Revendications

1. Procédé pour actualiser une base de données géographique, dans lequel on vérifie en se basant sur des informations fournies par un système de navigation de véhicule si un véhicule (20) se trouve (100) dans une position sur une route (14), une image géographiquement codée étant produite (102) en utilisant une caméra embarquée dans le véhicule si, selon les informations fournies par le système de navigation de véhicule, le véhicule ne se trouve pas dans une position sur la route, et l'image géographiquement codée produite à l'aide de la caméra embarquée dans le véhicule étant analysée pour vérifier si une actualisation de la base de données géographique est nécessaire, **caractérisé en ce que** l'analyse de l'image géographiquement codée produite par la caméra embarquée dans le véhicule comprend (104) une comparaison de l'image géographiquement codée à des données d'image photoréalistes mémorisées, un contrôle étant effectué pour savoir si de nouvelles données sont disponibles (124) sur un serveur externe pour être téléchargées lorsque des caractéristiques de route sont observées (120) sur l'image géographiquement codée produite par la caméra embarquée dans le véhicule mais que l'image géographiquement codée produite par la caméra embarquée dans le véhicule ne coïncide pas (104) avec des données d'image géographiquement correspondantes et mémorisées pour une position instantanée et que de plus ni une route coïncidant en dernier lieu ni une route suivante ne sont observées (116) sur l'image géographiquement codée, de nouvelles données étant téléchargées (126) lorsque de nouvelles données sont disponibles sur le serveur externe pour être téléchargées, l'existence d'une nouvelle route étant annoncée (128) au serveur externe sur la base des caractéristiques de route observées sur l'image géographiquement codée lorsqu'aucune nouvelle donnée n'est disponible sur le serveur externe pour être téléchargée, et des images géographiquement codées de la nouvelle route étant produites (130) à l'aide de la caméra embarquée dans le véhicule, et une nouvelle route étant ajoutée directement dans une base de données du système de navigation de véhicule lorsque la nouvelle route est observée avec un niveau de confiance donné.

2. Procédé selon la revendication 1, **caractérisé en ce que** l'image géographiquement codée produite par la caméra embarquée dans le véhicule est analysée pour détecter (106) des caractéristiques de route dans l'image géographiquement codée lorsque l'image géographiquement codée coïncide avec des données d'image géographiquement correspondantes, qui sont mémorisées (104) comme données d'image photoréalistes, et **en ce que** l'on déduit que le véhicule se trouve effectivement dans une position à côté de la route et qu'aucune actualisation de la base de données géographique n'est nécessaire lorsqu'aucune route n'est observée (108) sur l'image géographiquement codée produite par la caméra embarquée dans le véhicule.

3. Procédé selon au moins l'une quelconque des revendications précédentes, **caractérisé en ce que**, lors du contrôle effectué pour savoir si de nouvelles données sont disponibles sur le serveur externe pour être téléchargées, on contrôle si de nouvelles données de vecteur de route sont disponibles (110) sur le serveur externe, et **en ce que**, lorsque de nouvelles données de vecteur de route sont disponibles sur le serveur externe, les nouvelles données de vecteur de route sont téléchargées (114) à partir du serveur externe.

4. Procédé selon la revendication 3, **caractérisé en ce que** le serveur externe se voit notifier (112) une actualisation de vecteur de route sur la base de valeurs mesurées, qui sont fournies par le système de navigation de véhicule lorsque le véhicule roule sur la route observée, lorsqu'aucune nouvelle donnée de vecteur de route n'est disponible (110) sur le serveur externe.

5. Procédé selon la revendication 1, **caractérisé en ce que** le serveur externe se voit notifier (118) le peu de fiabilité du système de navigation de véhicule lorsque l'image géographiquement codée produite par la caméra embarquée dans le véhicule ne coïncide pas (104) avec des données d'image photoréalistes géographiquement correspondantes et mémorisées pour une position instantanée mais qu'une route coïncidant en dernier lieu ou une route suivante est observée (116) sur l'image géographiquement codée produite par la caméra embarquée dans le véhicule.

6. Procédé selon la revendication 1, **caractérisé en ce que** l'on déduit que le véhicule se trouve effectivement dans une position à côté de la route et qu'aucune actualisation de la base de données géographique n'est nécessaire (122) lorsque l'image géographiquement codée produite par la caméra embarquée dans le véhicule ne coïncide pas (104) avec des données d'image géographiquement correspondantes et mémorisées pour une position instantanée et que ni une route coïncidant en dernier lieu ni une route suivante ni des caractéristiques de route ne sont observées (116, 120) sur l'image géographiquement codée produite par la caméra embarquée dans le véhicule.

7. Procédé selon la revendication 1, **caractérisé en ce que** la production des images géographiquement codées de la nouvelle route comprend une production d'images géographiquement codées d'une intersection entre la nouvelle route et une route connue.

8. Procédé selon au moins l'une quelconque des revendications précédentes, **caractérisé en ce que** l'on contrôle sur la base de conditions météorologiques et/ou de conditions de lumière si l'image géographiquement codée peut être produite avec une qualité suffisante et, lorsque l'image géographiquement codée ne peut pas être produite avec une qualité suffisante, le serveur externe se voit notifier une demande d'une autre analyse d'une position donnée.

9. Procédé selon la revendication 8, **caractérisé en ce que** la notification de la demande d'une autre analyse d'une position donnée comprend une demande d'images, qui doivent être produites par un autre véhicule.

10. Procédé selon la revendication 1, **caractérisé en ce que** la nouvelle route est indiquée par le système de navigation de véhicule comme étant une route non confirmée jusqu'à ce que la nouvelle route soit confirmée et actualisée dans une base de données principale du serveur externe.

11. Procédé selon au moins l'une quelconque des revendications précédentes, **caractérisé en ce qu'**un lieu de départ et un lieu d'arrivée sont envoyés par le système de navigation de véhicule au serveur externe, **en ce qu'**un nouveau calcul d'itinéraire pour le véhicule est exécuté avec le serveur externe en tenant compte de nouvelles routes, qui ont été ajoutées par d'autres véhicules à une base de données principale sur le serveur externe, et **en ce qu'**un itinéraire calculé est envoyé par le serveur externe au véhicule.

12. Procédé selon au moins l'une quelconque des revendications précédentes, **caractérisé en ce que**, en plus de la caméra embarquée dans le véhicule, une autre caméra embarquée dans le véhicule est utilisée pour produire des images géographiquement codées, la caméra et l'autre caméra détectant des images d'une zone de terrain devant ou derrière le véhicule.

13. Procédé selon au moins l'une quelconque des revendications précédentes, **caractérisé en ce que**, en plus de la caméra embarquée dans le véhicule, au moins une autre caméra embarquée dans le véhicule est utilisée pour produire des images géographiquement codées, la caméra détectant des images d'une zone de terrain devant ou derrière le véhicule et l'au moins une autre caméra détectant des images d'au moins une zone de terrain située sur le côté du véhicule.

14. Procédé selon au moins l'une quelconque des revendications précédentes, **caractérisé en ce que** l'analyse d'une image géographiquement codée comprend une recherche d'au moins une caractéristique de route sur l'image géographiquement codée, la caractéristique de route pouvant être un contour de route, une bordure de trottoir, un marquage de surface de chaussée, un panneau de signalisation routière et/ou un autre véhicule.

15. Procédé selon au moins l'une quelconque des revendications précédentes, **caractérisé en ce que** l'étape lors de laquelle on vérifie si le véhicule (20) se trouve (100) dans une position sur une route (14) comprend une comparaison de données de position mesurées à des données de vecteur de route mémorisées.

16. Procédé selon au moins l'une quelconque des revendications précédentes, **caractérisé en ce que** l'image géographiquement codée comprend une image d'une zone de terrain proche du véhicule et au moins une coordonnée géographique.

17. Procédé selon au moins la revendication 16, **caractérisé en ce que** l'image géographiquement codée couvre une zone de terrain sensiblement trapézoïdale proche du véhicule et comprend quatre coordonnées géographiques, qui indiquent les quatre angles de la zone de terrain sensiblement trapézoïdale.

18. Procédé selon au moins l'une quelconque des revendications précédentes, **caractérisé en ce que** le système de navigation de véhicule est un système de navigation par satellite, qui utilise une base de données géographique, qui contient au moins des données de vecteur de route et des données d'image photoréalistes.
